# EUROPEAN PATENT SPECIFICATION

(11) **EP 0 325 213 B1**
(45) Date of publication and mention of the grant of the patent: **09.11.1994**
(21) Application number: 89100737.9
(22) Date of filing: 17.01.1989
(51) Int. Cl.: B01J 23/84, B01J 35/10, C01B 17/79

(54) **High-density, medium-porosity catalyst supported on a siliceous matrix and based on vanadium, iron, oxygen and alkali metal**
Vanadium, Eisen, Sauerstoff und Alkalimetalle enthaltender, auf einer kieselartigen Matrix aufgetragener Katalysator mit hoher Dichte und mittlerer Porösität
Catalysateur à base de vanadium, fer, oxygène et de métaux alcalins, ayant une grande densité, une porosité moyenne et supporté par une matrice silicieuse

(30) Priority: 18.01.1988 IT 1909888
(43) Date of publication of application: 26.07.1989
(73) Proprietor: AUSIMONT S.r.l., I-20100 Milano (IT)
(72) Inventor: Cavalli, Luigi, Dr., I-28100 Novara (IT); Nardini, Renzo, I-13100 Vercelli (IT)
(74) Representative: Weinhold, Peter, Dr.

(56) References cited:
- EP-A- 0 088 294
- GB-A- 972 402
- GB-A- 1 520 336
- GB-A- 1 520 709
- US-A- 4 064 072
- US-A- 4 284 530

## Description

Catalysts based on vanadium and supported on a siliceous matrix, are commonly used for the oxidation of sulphur dioxide to sulphur trioxide; see for example GB-A-808,639; 898,985; 972,402 and 1,520,336; US-A-3,448,061 and 4,485,190 and EP-A-47,540 and 151,823. As siliceous matrix diatomaceous earth and finely subdivided silica gel are generally used, but good results are also obtainable with alpha quartz (cristobalite), silicalites, vanadium silicalites or titanium silicalites. As to the meaning of these terms, reference is made to GB-A-2,024,790. Said catalysts can be approximately represented by the following formula (I):

V ₓ K _{y} Na _{z} O _{w} S ₜ (I)

wherein x, y, w, z and t are broadly varying indices (depending on the working conditions and the degree of ageing) and where z can also be zero. Iron (Fe) and other elements (Cs, Al, Mn, Mg etc.) are also often present. Other elements (As, Cl, F, Se etc.) are known to be catalyst poisons even if present in very small amounts. These catalysts, employable in both fixed and fluidized beds, contain vanadyl-alkali metal sulphates and pyrosulphates, the concentrations of which vary as a function of time. The yields obtainable with these catalysts are high, especially if use is made of a series of several catalyst layers (at least 3 or 4) of the axial or radial type. Generally, the catalyst is prepared by impregnating diatomaceous earth or a different siliceous carrier (average diameter = about 1 to 40 µm), with an aqueous solution of soda (NaOH) and of potassium metavanadate (KVO₃) and/or ammonium metavanadate (NH₄VO₃), whereafter the earth is thickened, for example with carboxymethyl cellulose (CMC) or with a polyacrylamide; the paste is then extruded, whereby particles of various shapes (hollow or solid cylinders, polylobed cylinders, optionally having helical grooves etc.) may be obtained. Prior to use, the catalyst is activated by a SO₂ stream and a final activation is carried out by the same process fluid, containing SO₂, SO₃, O₂ and N₂, at the reaction temperature (350-650°C). During the oxidation of SO₂ to SO₃ the activated material is present in the form of a liquid film on the surface of the pores of the support. The average lifetime of these catalysts is between 5 and 10 years with a progressive decrease of the vanadium content (for instance from about 7% to about 5% by weight). Therefore, the possibility of regeneration and reusing the exhausted catalyst would be a very important advantage from an industrial point of view. So far, however, it was not possible to translate into reality any of the alternatives proposed so far for said purpose.

According to the first alternative (see Journal of Catalysis 43, 243-251 (1976)), the exhausted catalyst should be treated with a strong acid (HCl), capable of solubilizing the vanadium, and the same vanadium should then be recovered by means of extraction. This method was not translated into action because the insoluble siliceous gangue tenaciously retains a non-negligible amount of vanadium. The problems connected with the separation from the gangue so far have proved insurmountable, at least from an industrial point of view.

The second alternative (see again the above article in the Journal of Catalysis) comprises strong heating of the exhausted catalyst (at 500°C), in order to remove arsenic and other poisons, followed by grinding of the calcination residue. Thereafter the ground catalyst has to be kneaded with sulphur and a solution of ammonium sulphate, whereafter an activation with air at 750-800°C is carried out. However, this method, too, is not free of drawbacks. The mechanical resistance (to compression), the resistance to ageing and the abrasion resistance of the resulting catalyst are not fully satisfactory; furthermore, the SO₂ conversion often decreases in unacceptable manner.

The last alternative is to re-use an exhausted catalyst having a very high silica content (higher than 80% by weight); in this case, however, as a consequence of the prolonged exploitation of the catalyst, a considerable portion of the catalytic activity is irretrievably lost.

US-A-4,284,530 describes a freshly prepared (i.e. not regenerated) catalyst for the oxidation of sulfur dioxide comprising vanadium supported by a microporous carrier. The microporous carrier is characterized by a silica content greater than 85 percent, an alumina content greater than 3 but less than 5 percent, an iron content less than 2.0 percent, a surface area greater than 10 m²/g, a bulk density more than 0.10 and less than 0.35 g/cm³, a mean pore diameter greater than 0.3 and less than 2.5 µm, a pore volume greater than 2 ml/g, and a porosity greater than 65 percent. The product containing vanadium is reported to be easily extrudable into pellets or other shaped forms to give both a durable and highly active catalyst.

The Applicant has now found an excellent catalyst which does not exhibit the above shortcomings and can be prepared in extremely simple and rapid manner, starting from a previously exploited and already exhausted catalyst. The process for the preparation thereof is disclosed in EP-A-0 325 214.

In its broadest form, the invention relates to a high-density, medium-porosity catalyst for the oxidation of SO₂ to SO₃, supported on a siliceous matrix and based on SO₃, vanadium, iron, oxygen and alkali metals, in which the V₂O₅ content ranges from 6 to 9% by weight, the Me₂O content ranges from 8.5 to 12% by weight (Me being an alkali metal and in particular potassium), the particle density (see standard ASTM-D-3766-83a) ranges from 1.10 to 1.40 (preferably from 1.10 to 1.35) g/cm³ and furthermore:
- the volume of the pores is from 0.20 to 0.70 cm³/g (preferably from 0.30 to 0.70 cm³/g) and the surface area is from 0.30 to 5 m²/g (preferably from 0.50 to 3 m²/g), the average radius of the pores being from 600 to 2200 and preferably from 650 to 1000 nm;
- the SiO₂ content is equal to or lower than 75% and preferably lower than 60% by weight and the Fe₂O₃ content is equal to or higher than 0.90% by weight.

The presence of a relatively high iron content proves that the catalyst originates from an exhausted one (used as a raw material), in which iron has accumulated (iron, in the first place, is due to the corrosion of the apparatus). To calculate the average radius of the pores (in nm), the following formula may be used:

$\text{R = (2 V/S) x 1000,}$

wherein V is the volume of the pores (cm³/g) and S is the surface area (m²/g).

This catalyst can be prepared in exceptionally rapid and simple manner by grinding an exhausted catalyst of the same tpye, having a silica content equal to or lower than 75% and preferably lower than 60% by weight (coming from a plant for the oxidation of sulphur dioxide to sulphur trioxide), until the average particle size ranges from 1 to 50 (preferably from 5 to 40) µm and thereafter adding an aqueous impregnating solution, containing a balancing amount of those catalytic elements the lack of which rendered the previously used catalyst unemployable exhausted); preferably said impregnating solution contains one or more water-soluble vanadium compounds and one or more water-soluble alkali metal compounds. Before adding the solution, it is possible to mix the ground catalyst with small amounts of fresh diatomaceous earth, up to a maximum amount of 60% and preferably 50% by weight, based on the whole catalyst. As an alternative to the diatomaceous earth, it is possible to use silicalites, titanium silicalites, vanadium silicalites or alpha quartz, provided, of course, that the final SiO₂ content in the catalyst does not exceed 75%, and preferably 60%, by weight. Excellent results have been obtained by adding said solution according to the technology known as "dry impregnation" described, for instance, in Ind.Eng.Chem.Prod.Res.Dev.; Vol.20 (1981), page 441. See also EP-A-47,540 and 151,823. As an alternative, the solution can be added before and/or after grinding, according to a technology known as "co-mulling" (see US-A-4,444,742 and 4,444,908).

The above (general) process for the preparation of the present catalyst can be carried out according to different procedures; for merely illustrative purposes, a few details are given hereinafter:
- the preferred alkali metal is potassium;
- as water-soluble compound of vanadium it is possible to use potassium, sodium or ammonium metavanadate, vanadium anhydride (V₂O₅) and analogous compounds;
- as water-soluble compound of potassium it is possible to use potassium hydroxide, oxalate, oxide, carbonate, bicarbonate, sulphate and bisulphate, potassium metavanadate (KVO₃) and analogous compounds;
- as water-soluble compound of sodium it is possible to use sodium hydroxide, oxalate, carbonate, bicarbonate, sulphate and bisulphate, sodium metavanadate (NaVO₃) and analogous compounds;
- as alkali metal, also caesium (besides K and Na) can be present;
- besides the basic elements (V, K, Na, O, Fe) also a synergistic amount of titanium can be present;
- thickening (by means of a carboxymethyl cellulose or of a polyacrylamide) can be carried out in one step or in more steps and can be preceded by the addition of a pore-forming agent (blowing agent), preferable selected from starch and ammonium phosphates (preferably diammonium phosphate), and optionally of H₂O;
- the catalyst can be shaped (pelletized) in the form of hollow or solid cylinders or of poly-lobed cylinders, optionally showing helical grooves etc., the shaping being followed by drying and activating calcination, in the presence of SO₂, at a temperature generally ranging from 270 to 600°C.

The present catalysts lead to an unexpected result; in fact, after a normal activation (first with SO₂, then with the process gases), they substantially exhibit - mass and temperature being the same - the catalytic activity of a fresh catalyst. This permits to charge the reactors with amounts of catalyst which are much higher (even by 20%) as compared to the operation with a fresh catalyst, which results in an increased conversion, without extending in any way the volume and/or the geometry of the reactors.

The following examples are to illustrate the invention, without being, however, a limitation of the scope thereof.

### Example 1 (fresh catalyst; reference example)

This example describes the usual preparation of a catalyst for the production of SO₃, using fresh diatomaceous earth as a raw material. To 1 kg of diatomaceous earth, having a SiO₂ content of 87.13% by weight and marketed by DIATOM Company under the trade name Diatom® 135C, there were added, under stirring, in a kneading machine equipped with sigmablades, 0.433 liters of a potassium vanadate solution (titre = 280 g/liter of V₂O₅). After 15 minutes there were added 0.17 l of concentrated sulphuric acid (density = 1.54 g/cm³). Stirring was continued for a further 15 minutes, whereafter there were added to the paste 126 g of carboxymethyl cellulose powder (CMC) and 930 g of an aqueous solution of CMC (3% by weight). The paste was extruded in a piston extruder, whereby (solid) cylinders having a diameter of 4 mm and a height of 5-6 mm were obtained. The resulting product was dried at 120°C for 12 hours and then activated at 450°C for 1 hour by simultaneously passing a SO₂ stream at 270°C over it. The thus prepared catalyst exhibited the following composition (by weight):

| | |
|---|---|
| V₂O₅ | = 7.84% |
| SO₃ | = 20.85% |
| K₂O | = 10.95% |
| Na₂O | = 1.37% |
| SiO₂ | = lower than 59%. |

It showed the following physical properties:

| | |
|---|---|
| surface area = 1.05 m²/g; | particle density = 0.86 g/cm³; |
| actual density = 2.41 g/cm³; | volume of pores = 0.784 cm³/g. |

### Example 2 (high-density regenerated catalyst)

This example describes a method of preparing a catalyst by impregnating the previously prepared and already exhausted catalyst with a solution of potassium metavanadate in amounts such as to bring the concentrations of vanadium and potassium to the corresponding levels of a fresh catalyst. The starting exhausted catalyst, sampled after discharge from an industrial converter, exhibited the following composition (by weight):

| | |
|---|---|
| V₂O₅ | = 7.00% |
| SO₃ | = 21.24% |
| K₂O | = 9.50% |
| Na₂O | = 0.93% |
| SiO₂ | = lower than 60% |

and the following physical characteristics:

| | |
|---|---|
| surface area = 1.66 m²/g: | particle density = 1.08 g/cm³; |
| actual density = 2.40 g/cm³; | volume of pores = 0.51 cm³/g. |

1 kg of said exhausted catalyst was ground until a powder (having a marked tendency to cake) was obtained, the particles of which had an average diameter below 50 µm. To the thus obtained powder there were added, under stirring in a kneader, 75 g of a potassium vanadate solution (titre = 305.8 g/liter of V₂O₅; density = 1.55 g/liter) diluted to 150 ml with H₂O. Stirring was continued for 15 minutes, whereafter 30 g of a polyacrylamide thickening agent, manufactured by MONTEFLUOS and marketed under the trade name Ecoclar® 8008 (as a powder), and 480 g of an aqueous solution of said Ecoclar® 8008 (concentration = 15 g/liter) were added. The product was then extruded, dried and activated according to the procedure of Example 1. The resulting catalyst exhibited the following weight composition:

| | | | |
|---|---|---|---|
| V₂O₅ | = 7.88% | SO₃ | = 22.93% |
| K₂O | = 10.80% | SiO₂ | = about 56% |
| Na₂O | = 0.90% | Fe₂O₃ | = 1.45% |

and the following physical characteristics:

| | |
|---|---|
| surface area = 0.76 m²/g; | particle density = 1.31 g/cm³; |
| actual density = 2.41 g/cm³; | pore volume = 0.304 cm³/g. |

For the activity tests a cylindrical laboratory reactor (surrounded by a thermostatic bath of molten salts), having an internal diameter of 42 mm and a height of 450 mm and equipped with a coaxial thermocouple was used. The reactor was charged with 80 g of regenerated catalyst (115 ml) and subdivided into ten layers of 8 g each, alternating with eleven layers of an inert material (calcined Al₂O₃) having a height of about 3 cm, in order to achieve a substantially isothermal reaction profile. Before being fed into the reactor, the catalyst was subjected to an activating grinding process, whereby particles having an average size of from 0.1 to 1 mm were obtained. The diffusional effects were substantially eliminated by said grinding.

The results are given in Table 1.

### Example 3

Example 2 was repeated, but the amount of catalyst fed to the reactor was increased to 120 g (140 cm³).

The results are given in Table 1.

### Example 4 (comparative test)

Example 2 was repeated, employing 80 g of exhausted, no-regenerated catalyst. The (unsatisfactory) results are listed in Table 1.

### Example 5 (comparative test)

This example illustrates the method of preparing a catalyst obtainable by subjecting the exhausted catalyst to a heat-treatment according to the article in the Journal of Catalysis (1976) cited above. Said heat-treatment was carried out in order to concentrate vanadium and potassium, bringing the concentrations of said elements back to the values of the fresh catalyst.

A sample of exhausted catalyst, sampled after discharge from an industrial converter, exhibited the following weight composition:

| | | | |
|---|---|---|---|
| V₂O₅ | = 7.11% | SO₃ | = 17.05% |
| K₂O | = 10.20% | | |
| Na₂O | = 1.16% | SiO₂ | = about 65% |

and the following physical properties:

| | |
|---|---|
| surface area = 3.03 m²/g; | particle density = 0.62 g/cm³; |
| density = 2.41 g/cm³; | pore volume = 1.20 cm³/g. |

The sample was heated in a muffle furnace at 530°C and maintained at this temperature for 24 hours, whereby a concentration of the active elements was achieved. The loss, at 100°C, amounted to 0.84% by weight (at 530°C the loss was 7.58%). After calcination, the sample was analyzed and the following values were found:

| | |
|---|---|
| V₂O₅ | = 7.96% by weight |
| SO₃ | = 8.94% by weight. |

To a sample of 1 kg of exhausted catalyst, treated at 530°C as described above, there were added 1 g of Ecoclar® 8008 and 600 g of a solution (15 g/liter) of Ecoclar® 8008; the components were mixed under stirring, extruded and then dried and activated according to the procedure of example 1. The catalytic test, carried out in accordance with the procedure of example 2, yielded the results given in Table 1 along with the characteristics of the finished catalyst. As can clearly be taken from said Table 1, the method of 1976 leads to a catalyst having too small pores, showing less satisfactory performance than the catalyst of the invention.

### Example 6

Example 3 was repeated, adding starch as a blowing agent during the preparation of the catalyst; the obtained catalyst had the following physical characteristics:

| | |
|---|---|
| surface area = 0.42 m²/g; | particle density 1.15 g/cm³; |
| average radius of pores = 2190 nm; | pore volume = 0.46 cm³/g. |

The oxidation yields of this catalyst were analogous to the yields obtained from the test of example 3.

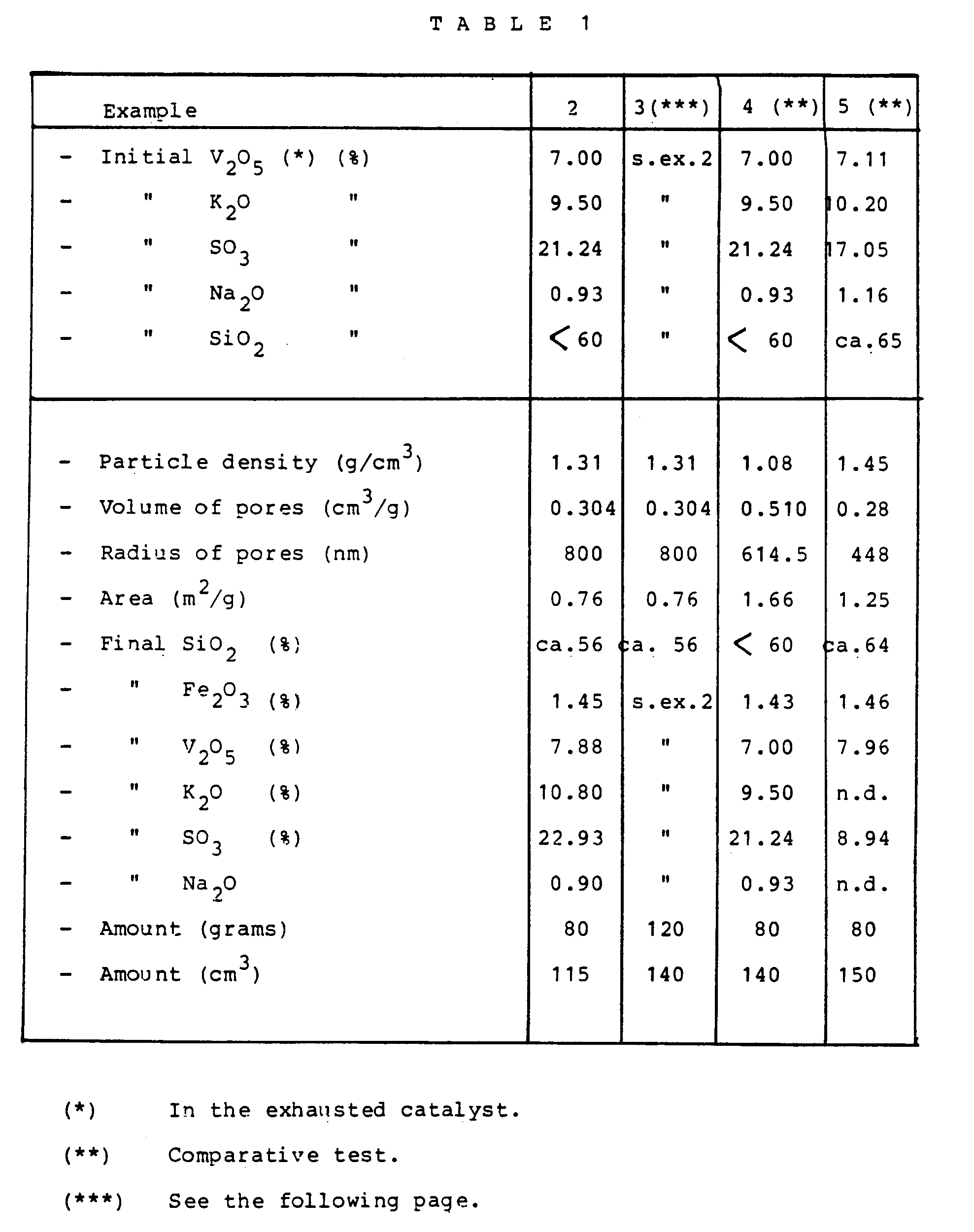

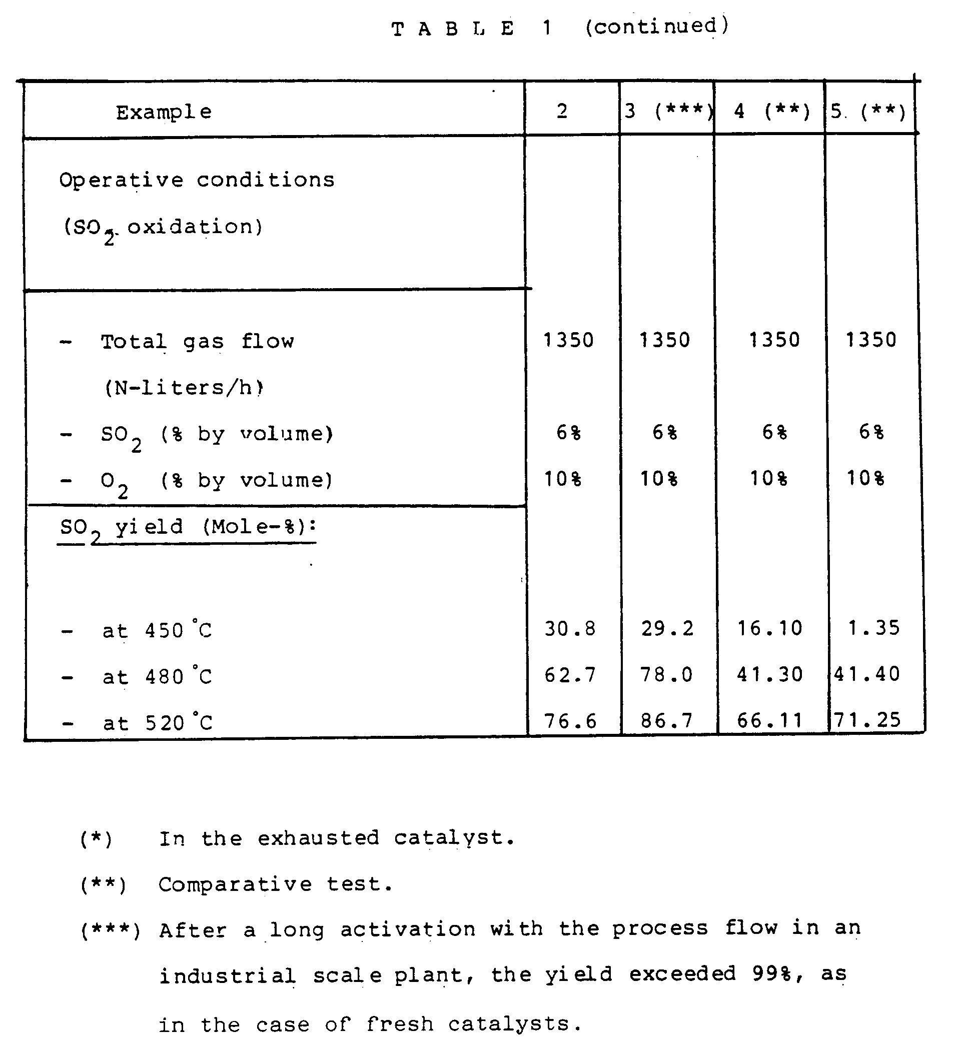

## Claims

1. A high-density, medium-porosity catalyst for the oxidation of SO₂ to SO₃, supported on a siliceous matrix and based on SO₃, vanadium, iron, oxygen and alkali metals and having a V₂O₅ content of from 6 to 9% by weight, a Me₂O content of from 8.5 to 12% by weight (Me being an alkali metal) and a particle density of from 1.10 to 1.40 (preferably from 1.10 to 1.35) g/cm³, wherein furthermore:
- the volume of the pores ranges from 0.20 to 0.70 (preferably from 0.30 to 0.70) cm³/g, the surface area ranges from 0.30 to 5 m²/g (preferably from 0.50 to 3 m²/g) and the average radius of the pores is from 600 to 2,200 nm (preferably from 650 to 1,000 nm);
- the silica (SiO₂) content is equal to or lower than 75% (preferably lower than 60% by weight) and the Fe₂O₃ content is equal to or higher than 0.90% by weight.

2. The catalyst of claim 1, having the shape of solid or hollow cylindrical pellets (rings) or of poly-lobed cylindrical pellets, optionally showing helical grooves.

3. The catalyst of any one of the preceding claims which contains caesium, together with another alkali metal, and optionally also a synergistic amount of titanium.

4. Catalyst according to any one of claims 1 to 3, when obtained by means of a process comprising:
(i) grinding a preformed and already used (exhausted) catalyst until the average diameter of the particles is from 1 to 50 µm (preferably 5 to 40 µm);
(ii) impregnating the thus obtained particles by means of an aqueous solution containing
a) one or more water-soluble vanadium compounds, preferably selected from KVO₃, NaVO₃, NH₄VO₃, and V₂O₅, particularly potassium metavanadate and/or ammonium metavanadate;
b) one or more water-soluble potassium compounds, preferably selected from potassium hydroxide, oxide, oxalate, carbonate, bicarbonate, sulphate, bisulphate and metavanadate, particularly potassium metavanadate and/or potassium bisulphate.

5. Catalyst according to claim 4, in the preparation whereof fresh diatomaceous earth, in an amount of up to 60%, and preferably up to 50% by weight, based on the whole mixture of added catalyst components, is added to the ground catalyst prior to impregnation, said earth optionally being replaced, totally or partially, by one or more of silicalites, titanium silicalites, vanadium silicalites and alpha-quartz.

6. Catalyst according to claims 4 and 5, in the preparation whereof the impregnation is effected according to the dry-impregnation technology.

7. Catalyst according to one or more of claims 4 to 6, in the preparation whereof the impregnation is followed by a thickening process, in one or more steps, preferably by addition of a carboxymethyl cellulose and/or a polyacrylamide (optionally hydrolized).

8. Catalyst according to claim 7, in the preparation whereof the thickening process is preceded by the addition of a pore-forming agent, preferably selected from starch and the ammonium phosphates (in particular diammonium phosphate), optionally along with water; and/or the thickening process is followed by a shaping process, preferably by means of extrusion, for forming solid, hollow or poly-lobed cylindrical particles, optionally having helical grooves, said shaping process being optionally followed by drying and by calcination in the presence of SO₂, at temperatures of from 270°C to 600°C.

9. Catalyst according to one or more of claims 4 to 8, in the preparation whereof the impregnating solution also contains one or more water-soluble sodium compounds, preferably selected from sodium hydroxide, oxide, carbonate, bicarbonate, sulphate, bisulphate and metavanadate; and/or one or more water-soluble caesium compounds and/or one or more pore-forming agents and/or one or more water-soluble titanium compounds.

## Patentansprüche

1. Katalysator mit hoher Dichte und mittlerer Porosität zur Oxidation von SO₂ zu SO₃ auf einer Siliciumdioxid-enthaltenden Matrix als Träger, und auf SO₃, Vanadium, Eisen, Sauerstoff und Alkalimetallen basierend, der einen V₂O₅-Gehalt von 6 bis 9 Gew.-%, einen Me₂O-Gehalt von 8,5 bis 12 Gew.-% (wobei Me ein Alkalimetall ist) und eine Teilchendichte von 1,10 bis 1,40 (vorzugsweise von 1,10 bis 1,35) g/cm³ aufweist, worin weiterhin:
- das Porenvolumen im Bereich von 0,20 bis 0,70 (vorzugsweise von 0,30 bis 0,70) cm³/g liegt, die Oberfläche im Bereich von 0,30 bis 5 m²/g (vorzugsweise von 0,50 bis 3 m²/g) liegt und der Durchschnittsradius der Poren zwischen 600 und 2.200 nm (vorzugsweise zwischen 650 und 1.000 nm) beträgt;
- der Siliziumdioxidgehalt (SiO₂) gleich oder weniger als 75 % (vorzugsweise weniger als 60 Gew.-%) beträgt und der Fe₂O₃-Gehalt gleich oder höher als 0,90 Gew.-% ist.

2. Katalysator nach Anspruch 1, der die Form von kompakten oder hohlen zylindrischen Pellets (Ringen) oder eines mehrfach gelappten zylindrischen Pellets hat und gegebenenfalls spiralförmige Vertiefungen aufweist.

3. Katalysator nach einem der vorhergehenden Ansprüche, der, zusammen mit einem anderen Alkalimetall, Cäsium und gegebenenfalls auch synergistische Mengen an Titan enthält.

4. Katalysator nach einem der Ansprüche 1 bis 3, der durch ein Verfahren erhalten wurde, welches umfaßt:
(i) Mahlen eines vorgeformten und bereits gebrauchten (verbrauchten) Katalysators, bis der durchschnittliche Durchmesser der Teilchen von 1 bis 50 µm (vorzugsweise von 5 bis 40 µm) beträgt;
(ii) Imprägnieren der so erhaltenen Teilchen mit einer wässrigen Lösung, die enthält:
a) eine oder mehrere wasserlösliche Vanadiumverbindungen, vorzugsweise ausgewählt aus KVO₃, NaVO₃, NH₄VO₃ und V₂O₅, insbesondere Kaliummetavanadat und/oder Ammoniummetavanadat;
b) eine oder mehrere Kaliumverbindungen, vorzugsweise ausgewählt aus Kaliumhydroxid, -Oxid, -Oxalat, -Carbonat, -Bicarbonat, -Sulfat, -Bisulfat und -Metavanadat, insbesondere Kaliummetavanadat und/oder Kaliumbisulfat.

5. Katalysator nach Anspruch 4, wobei bei dessen Herstellung frische Diatomeenerde in einer Menge bis zu 60 Gew.% und vorzugsweise bis zu 50 Gew.-%, bezogen auf die gesamte Mischung der zugegebenen Katalysatorkomponenten, zu dem gemahlenen Katalysator vor der Imprägnierung zugegeben wird, wobei die genannte Erde gegebenenfalls ganz oder teilweise durch ein oder mehrere Silikalite, Titansilikalite, Vanadiumsilikalite bzw. α-Quarz ersetzt wird.

6. Katalysator nach Anspruch 4 und 5, wobei bei dessen Herstellung die Imprägnierung nach der Trocken-Imprägnier-Technik erfolgt.

7. Katalysator nach einem der Ansprüche 4 bis 6, wobei bei dessen Herstellung auf die Imprägnierung ein Verdickungsverfahren in einem oder mehreren Schritten folgt, vorzugsweise durch Zugabe einer Carboxylmethylzellulose und/oder eines Polyacrylamid (gegebenenfalls hydrolysiert).

8. Katalysator nach Anspruch 7, wobei bei dessen Herstellung dem Verdickungsverfahren die Zugabe eines Porenformenden Mittels vorausgeht, vorzugsweise ausgewählt aus Stärke und den Ammoniumphosphaten (insbesondere Diammoniumphosphat), gegebenenfalls zusammen mit Wasser; und/oder dem Verdickungsverfahren ein Formgebungsverfahren folgt, vorzugsweise mittels Extrudieren zur Bildung von kompakten, hohlen oder mehrfach gelappten zylindrischen Teilchen, die gegebenenfalls spiralförmige Vertiefungen haben, wobei dem genannten Formgebungsverfahren gegebenenfalls Trocknen und Kalzinieren in Anwesenheit von SO₂ bei Temperaturen von 270° C bis 600° C folgt.

9. Katalysator nach einem der Ansprüche 4 bis 8, wobei bei dessen Herstellung die Imprägnierlösung auch eine oder mehrere wasserlösliche Natriumverbindungen, vorzugsweise ausgewählt aus Natriumhydroxid, -Oxid, -Carbonat, -Bicarbonat, -Sulfat, -Bisulfat und -Metavanadat; und/oder eine oder mehrere wasserlösliche Cäsiumverbindungen und/oder ein oder mehrere Porenformende Mittel und/oder eine oder mehrere wasserlösliche Titanverbindungen enthält.

## Revendications

1. Un catalyseur de porosité moyenne et de haute densité pour l'oxydation de SO₂ en SO₃, supporté sur une matrice siliceuse et à base de métaux alcalins, d'oxygène, de fer, de vanadium et de SO₃, et présentant une teneur en V₂O₅ de 6 à 9% en poids, une teneur en Me₂O de 8,5 à 12% en poids (Me étant un métal alcalin) et une densité particulaire de 1,10 à 1,40 g/cm³ (de préférence de 1,10 à 1,35 g/cm³), dans lequel, de plus:
- le volume des pores est de 0,20 à 0,70 cm³/g (de préférence de 0,30 à 0,70 cm³/g), la surface spécifique est de 0,30 à 5 m²/g (de préférence de 0,50 à 3 m²/g) et le rayon moyen des pores est de 600 à 2200 nm (de préférence de 650 à 1000 nm);
- la teneur en silice (SiO₂) est inférieure ou égale à 75% (de préférence inférieure à 60% en poids) et la teneur en Fe₂O₃ est supérieure ou égale à 0,90% en poids.

2. Le catalyseur selon la revendication 1, se présentant sous la forme de granules (anneaux) cylindriques creux ou solides ou de granules cylindriques polylobés, comportant éventuellement des rainures hélicoïdales.

3. Le catalyseur selon l'une quelconque des revendications précédentes qui contient du césium ainsi qu'un autre métal alcalin, et éventuellement également une quantité synergique de titane.

4. Le catalyseur selon l'une quelconque des revendications 1 à 3, lorsqu'il est obtenu au moyen d'un procédé comprenant:
(i) le broyage d'un catalyseur préformé et déjà utilisé (usé) jusqu'à ce que le diamètre moyen des particules soit de 1 à 50 µm (de préférence de 5 à 40 µm);
(ii) l'imprégnation des particules ainsi obtenues par une solution aqueuse contenant:
a) un ou plusieurs dérivés de vanadium hydrosolubles sélectionnés de préférence parmi KVO₃, NaVO₃, NH₄VO₃ et V₂O₅, plus particulièrement parmi métavanadate de potassium et/ou métavanadate d'ammonium;
b) un ou plusieurs dérivés de potassium hydrosolubles sélectionnés de préférence parmi hydroxyde, oxyde, oxalate, carbonate, bicarbonate, sulfate, bisulfate et métavanadate de potassium, et plus particulièrement parmi métavanadate de potassium et/ou bisulfate de potassium.

5. Catalyseur selon la revendication 4, dans la préparation duquel de la terre à diatomées fraîche, en une quantité pouvant atteindre 60%, et de préférence pouvant atteindre 50% en poids, par rapport au mélange total des composants catalytiques ajoutés, est ajoutée au catalyseur broyé avant l'imprégnation, ladite terre étant éventuellement remplacée, en totalité ou en partie, par un ou plusieurs composés sélectionnés parmi silicalites, silicalites de titane, silicalites de vanadium et quartz alpha.

6. Catalyseur selon les revendications 4 et 5, dans la préparation duquel l'imprégnation est effectuée selon la technologie d'imprégnation par voie sèche.

7. Catalyseur selon une ou plusieurs des revendications 4 à 6, dans la préparation duquel l'imprégnation est suivie par un procédé d'épaississement, en une ou plusieurs étapes, de préférence par addition d'une carboxyméthylcellulose et/ou d'un polyacrylamide (éventuellement hydrolysé).

8. Catalyseur selon la revendication 7, dans la préparation duquel le procédé d'épaississement est précédé par l'addition d'un agent formant des pores, de préférence sélectionné parmi amidon et phosphates d'ammonium (en particulier phosphate de diammonium), éventuellement avec de l'eau; et/ou le procédé d'épaississement est suivi par un procédé de façonnage, de préférence par extrusion, pour former des particules cylindriques polylobées ou creuses, solides, présentant éventuellement des rainures hélicoïdales, ledit procédé de façonnage étant éventuellement suivi par un séchage et par une calcination en présence de SO₂ à des températures de 270 à 600°C.

9. Catalyseur selon une ou plusieurs des revendications 4 à 8, dans la préparation duquel la solution d'imprégnation contient également un ou plusieurs dérivés de sodium hydrosolubles sélectionnés de préférence parmi hydroxyde, oxyde, carbonate, bicarbonate, sulfate, bisulfate et métavanadate de sodium; et/ou un ou plusieurs dérivés de césium hydrosolubles et/ou un ou plusieurs agents formant des pores et/ou un ou plusieurs dérivés de titane hydrosolubles.
